# EUROPEAN PATENT SPECIFICATION

(11) **EP 4 619 343 B1**
(45) Date of publication and mention of the grant of the patent: **29.07.2026**
(21) Application number: 23808764.7
(22) Date of filing: 15.11.2023
(51) Int. Cl.: C02F 3/08, B01D 21/24, B03D 1/14, C02F 1/38, C02F 3/20

(54) **AEROBIC GRANULAR BIOREACTOR**
AEROBER GRANULARER BIOREAKTOR
BIORÉACTEUR GRANULAIRE AÉROBIE

(30) Priority: 15.11.2022 ES 202230987
(43) Date of publication of application: 24.09.2025
(73) Proprietor: Universidad de Granada, 18071 Granada (ES)
(72) Inventor: GONZÁLEZ MARTÍNEZ, Alejandro, 18071 Granada (ES); GONZÁLEZ LÓPEZ, Jesús Juan, 18071 Granada (ES); ROSA MASEGOSA, Aurora, 18071 Granada (ES)
(74) Representative: Elion IP, S.L.
(86) International application number: PCT/EP2023/081940
(87) International publication number: WO 2024/105117

(56) References cited:
- WO-A1-99/03592
- CN-U- 203 625 119
- ROSA-MASEGOSA AURORA ET AL: "New Advances in Aerobic Granular Sludge Technology Using Continuous Flow Reactors: Engineering and Microbiological Aspects", WATER, vol. 13, no. 13, 29 June 2021 (2021-06-29), CH, pages 1792, XP093018408, ISSN: 2073-4441, Retrieved from the Internet <URL:http://dx.doi.org/10.3390/w13131792> DOI: 10.3390/w13131792
- XIA S ET AL: "Tracking composition and dynamics of nitrification and denitrification microbial community in a biofilm reactor by PCR-DGGE and combining FISH with flow cytometry", BIOCHEMICAL ENGINEERING JOURNAL, ELSEVIER, AMSTERDAM, NL, vol. 49, no. 3, 15 May 2010 (2010-05-15), pages 370 - 378, XP026980830, ISSN: 1369-703X, [retrieved on 20100204]

## Description

### Field of invention

The present invention falls within the field of water treatment, specifically treatment equipment used for wastewater treatment, drinking water treatment and biodegradable industrial effluents.

### State of the art

Pollution caused by the discharge of wastewater into the environment is one of the main environmental problems. Wastewater contains a wide variety of chemical and biological compounds that can affect natural ecosystems and/or people's health, and treatment of these before discharge is a priority. In general, an urban wastewater composition can be defined according to Table 1.

**Table 1: Composition of a standard urban wastewater**

| **Waste** | | **Concentration (mg/L)** |
|---|---|---|
| Total solids | | 700-800 |
| | - Total dissolved / suspended / sedimentable | 450-550 / 150-250 / 5-15 |
| DBO₅ | | 200-300 |
| COT | | 150-170 |
| COD | | 300-600 |
| Total nitrogen | | 40-80 |
| | - Organic / free ammonia | 15-30 / 25-50 |
| Total phosphorus | | 8-16 |
| | - Organic / inorganic | 3-6 / 5-10 |
| Chlorides | | 40-60 |
| Sulfate | | 25-35 |

The most widespread urban wastewater treatment technologies worldwide are technologies based on activated sludge biological reactors.

Throughout its more than 100 years of history these technologies have undergone numerous modifications in an attempt to improve their efficiency in terms of organic matter, phosphorus and nitrogen removal, while at the same time reducing the space required for their installation and the economic costs derived from the process. By way of example, CN203625119U discloses an internal circulation aerobic particle sludge bioreactor, with functions of internal circulation, bio-contact flocculation, and filtering. The bio-reactor inter alia comprises a cylinder body, a bottom plate, an inverted-butt conical cylinder, an upper circular water-collecting tank that provide the bio-reactor with flexible adjustment and little occupied space features, along with a reduction on electricity consumption. By way of another example, XIA S ET AL: "Tracking composition and dynamics of nitrification and denitrification microbial community in a biofilm reactor by PCR-DGGE and combining FISH with flow cytometry", XP026980830, discloses a compact suspended carrier biofilm reactor for removing chemical oxygen demand. By way of another example, Rosa-Masegosa Aurora ET AL: "New Advances in Aerobic Granular Sludge Technology Using Continuous Flow Reactors: Engineering and Microbiological Aspects", XP093018408, relates to advances in aerobic granular sludge (AGS) technology using continuous flow reactors (CFR), summarizing technological approaches to AGS-CFR design, evaluating their technical and biological implications, and outlining future directions to upscale stable, cost-efficient systems for real wastewater treatment plants.

The biological purification system by active sludge, also called active sludge, consists in the development of a bacterial culture in an agitated, aerated and fed reservoir with the wastewater, which is able to metabolise the biological pollutants present in the wastewater as nutrients.

It allows the elimination of various polluting substances through a natural biological process carried out by various microbial groups responsible for purification, and the subsequent removal of the biomass generated from the water through sedimentation.

However, the large generation of biomass, in the form of sludge, and the high energy expenditure in pumping recirculation water, which accounts for about 50% of the total cost of treatment, causes a large increase in treatment costs, as well as the generation of significant amounts of sludge that need an appropriate treatment and high cost.

In addition, the increased restrictions on the quality of treated urban wastewater, for example Directive 271/91 EU; 98/15/EC, make it necessary to modify conventional active sludge systems to solve the problems related to eutrophication caused by nitrogen in particular areas.

During the last decade, a great interest has been shown in the treatment of domestic and industrial wastewater through the use of technologies based on aerobic granular systems.

Aerobic granular biomass operates under conditions with aeration, i.e., in the presence of oxygen. It is especially useful for treating high organic loads, as well as for the removal of nitrogen and phosphorus. At present, aerobic granular biomass is obtained in sequential aerobic systems, fed with wastewater, which are based on 4 operational stages: Aeration, decanting of biomass, emptying of treated water and filling with contaminated water. These stages allow the obtaining of an effective biomass film for water treatment.

Aerobic granulation allows a greater retention of biomass thanks to the fact that there is a decanting stage prior to the emptying of the treated water. All this allows a selection of the biomass with greater decanting capacity, which prevents the loss of this by the effluent in the emptying process. This causes a better sedimentation capacity, lower requirements for sludge recirculation and greater resistance to sudden changes in the influent and toxic compounds, compared to the active sludge.

Granular biomass is composed of a great microbial diversity that is responsible for eliminating existing contaminants in wastewater. However, among all the existing microorganisms (heterotrophic, denitrifying, nitrifying...) there are some that present a greater growth capacity within the granular biofilm systems, such as the families *Comamonadaceae, Zooglea, Pseudomonas,* among others. These microorganisms allow to obtain greater compaction and stability through the production of Exopolysaccharides (EPS).

The stratified structure of granular biomass allows to achieve aerobic and anaerobic zones within said biomass. This allows multiple biological processes to be performed at the same time, for example nitrification, denitrification, phosphorus removal and organic matter, which can be performed simultaneously in a single bioreactor under aeration conditions.

Nowadays, aerobic granulation is an alternative technology for water treatment, and there are already numerous treatment plants in Europe (mainly industrial wastewater) that incorporate this system, in sequential granular bioreactors (BGS). BGS is therefore a technology that allows obtaining the operational conditions required for the formation of granules (Isanta et al., 2015; Gonzalez-Martinez et al., 2017; Liu et al., 2017; Munoz-Palazon., 2018).

BGS reactors use serial feed, aeration, sedimentation, and emptying sequencing. Said process is complicated and requires separate control of each step. Feeding and emptying are especially problematic as they must be carried out in a short period of time, requiring pumping systems and radical changes in operational conditions.

The aerobic granulation process is favored in the BGS, thanks to the decanting process prior to emptying and the circular movement within the bioreactor, without this determining biomass losses. While the latest BGS systems developed have tried to simplify the operation of the system by simultaneously performing the filling and emptying phases, the difficulty remains a technical obstacle. In any case, the filling and emptying time in BGS reactors is always an inherent operational disadvantage in these systems (Pronk et al., 2015).

Therefore, the use of sequential reactors would be limited to the treatment of locations that generate low flows, since operating with multiple BGSs in parallel or installing equalization tanks to handle higher inlet flows is seen as an unreal alternative.

However, in recent years, interest has grown in developing continuous flow granular bioreactors (BRFC) (Chen et al., 2017; Xin et al., 2017; Corsino et al., 2016; Qian et al, 2017).

The application of this technology is estimated to allow the treatment of effluents with high flows, such as those treated in urban water purification systems in large cities over 20,000 equivalent inhabitants.

Unlike BGS reactors, BRFCs offer advantages in terms of greater control and greater simplicity of operation in the purification process (Corsino et al., 2016; Qian et al., 2017). In turn, it is possible to use it in previously existing infrastructures in the conventional treatment plants of active sludge currently operational, which operate with continuous flow due to the large volume of the treated influent.

To this end, we have described the use of reactors with separation blades that defined a first aerated zone of a second without aeration, the use of other designs such as concentric tubes with a central aeration zone and an external zone without aeration.

However, the elimination of the decanting period and the possibility of biomass loss due to the constant output of water treated by the effluent in current BRFCs systems translates as a negative effect on the compaction and stability of the granules, making it impossible to use such systems to treat a stream of water continuously in the long term.

In summary, these teams have significant operational constraints:
- BGS reactors require working with low operating rates
- BGS reactors require high automation due to their sequential mode operation.
- Existing BRFCs reactors have high biomass loss
- Impossibility of continuous treatment in a prolonged time
- Lack of stability and compaction of aerobic granules in BRFCs reactors,
- High efficiency loss of BRFCs systems

In order to overcome the limitations reported in the state of the art of bioreactors for the treatment of water, new equipment is proposed for this purpose.

### Description of the invention

The present invention describes a continuous flow bioreactor for water treatment as defined in claim 1, to a process of water treatment by forming granular biomass in a continuous flow bioreactor as defined in claim 8. Preferred embodiments thereof are defined in the dependent claims. The disclosed invention relates to the treatment of drinking water and wastewater, both urban and industrial.

The present invention solves the problems of the state of the art in continuous wastewater treatment by achieving the formation of granules that are stable in the long term. Thus, unlike current continuous flow bioreactor solutions, the formation of these granules allows these systems to be used for water treatment in a continuous and stable manner over time.

To achieve said stable granulation, the present invention describes a novel bioreactor configuration, operable under operating conditions that allow optimization in the development of biomass. Said operational conditions are set out in Table 2 below.

In this way, an aeration in the range 0,5-15 mg O₂ / liter manages to create a movement of the biomass within the bioreactor that allows the compaction of the biomass until the creation of a granular structure, where said compaction allows the realization of anaerobic processes within the granule. On the other hand, the pH ranges (6-9) and temperature (15-30°C) used are optimal for the growth of microorganisms that favor granular formation. Finally, the hydraulic retention time established is the time necessary to obtain a sufficient concentration of biomass to be able to eliminate the required contaminants in wastewater, as, for example, as established in the European Directive 91/271/EEC.

**Table 2: Operational conditions of the BRFC reactor.**

| **Operational status** | **Quantity** |
|---|---|
| **pH** | 6-9 |
| **Aeration (mg O₂ / liter)** | 0,5 - 15 |
| **Hydraulic retention time (h)** | 2 - 24 |
| **Temperature (°C)** | 5-45 |

In contrast to sequential granular reactors where biomass formation and water treatment are carried out by means of decanting, emptying, and filling periods, the present invention features a continuous flow aqueous stream feed. In this way, a significant improvement in the system is achieved by eliminating the need for some of these stages.

In this sense, the present bioreactor promotes the stabilization of multicellular contact resulting from the initial attraction forces, such as physical (Van der Waals forces, surface tension, etc.), chemical and biochemical forces.

For this purpose, the present bioreactor comprises a tank where the aqueous stream is accumulated. This tank has a base with a wall around the base, with an inlet for an influent, preferably wastewater, and an outlet for a clarified effluent.

In addition, the bioreactor includes an aeration device configured to introduce air into the bioreactor vessel. The air inlet thus has two functions. On the one hand, it provides the oxygen necessary for the development of the micro-organisms and, on the other hand, it generates a physical movement of a convective nature that favours contact between the bacteria in the fluid by means of hydrodynamic processes of diffusion by transfer of matter and cell mobility.

As a result of the existence of the aerator medium, the bioreactor has an upward flow of air, preferably in the form of bubbling in a range 0.5 and 15 mg O₂ per liter. More preferably, in a range 2 and 15 mg O₂ per liter. This configuration is the most efficient to obtain granular biomass for two main reasons:
1.- As the air bubbles always tend to rise in the water, there is a greater diffusion of oxygen from the gas bubble into the water for aerobic processes. This reduces air pumping requirements and therefore costs.
2.- Ascending aeration allows the biomass not to decant in the bottom, preventing the formation of granular biomass allowing to keep in constant motion the biomass to carry out the formation of granular biomass.

Therefore, without the presence of this upward flow, the granulated biomass of the sludge tends to descend to the bottom of the tank, while the suspended particles will remain in the fluid. By introducing an upward fluid stream, it will result in a fluidized bed, where the particulate matter presents an upward force that tends to carry them toward the top.

However, the granular particles have a size, preferably in the range 1-40 mm in diameter, and a configuration such that they are not sufficiently disturbed by the aeration flow and will descend under their own weight against the aeration flow, while the flocs, particles suspended in the fluid, are displaced by the aeration effect itself and separated by the top of the tank.

Therefore, the present invention makes it possible to keep the particulate biomass in the tank, leading to the granulation process, while removing excess biomass that is not required for the granulation process.

Depending on the airflow, the time of the particles inside the tank can be controlled, resulting in a process of stabilizing the granules correctly.

However, the granulation process is a progressive process, so biomass may initially present a smaller size, where the effect of the aeration of the tank was relevant and pushed it to the top of the tank leading to the loss of biomass needed in the tank.

To avoid this effect and the consequent loss of biomass as occurs in other solutions in the state of the art, the bioreactor comprises a deflector medium connected to the outlet of the bioreactor tank.

This deflector medium is configured to limit the outflow of granular biomass, i.e. its operating mechanism is equivalent to a pellet trap, where if any pellets are introduced inside the deflector medium, they tend to return to the bioreactor tank. For this purpose, the deflector medium comprises a hollow main body with three openings.

The deflector medium comprises a first opening or entry, or main entrance, located at its bottom. The location of this entry disfavors the entry of granular biomass, due to the tendency to sediment of this type of particles. That is, the first entry is configured to allow the entry into the main body of a water flow treated with a reduced concentration of granular biomass. It is also configured to return the decantable granular biomass to the bioreactor tank in case it enters the inside of the deflector medium.

On the other hand, the second opening, or outlet of the deflector medium, is connected to the outlet of the bioreactor tank. This second opening is preferably located on the side.

The effluent leaving the deflecting medium is therefore a treated water stream, comprising the flocs present in the fluid.

Finally, the third opening is located at the top of the deflector medium. The baffle medium is submerged in the fluid inside the bioreactor tank. Preferably, the upper part is at the same height or above the water level, which prevents granules from passing over, i.e. entering the interior of the deflector medium from this third opening. The function of the opening at the top is to allow air to escape in the event of any air bubbles entering the deflector medium, thus preventing their accumulation, which would make it difficult for the flow of treated water to exit the bioreactor. Preferably, this third opening occupies the upper part of the hollow main body completely. In this way, it avoids the existence of a surface on which a biofilm would form that could clog the outlet of the deflector medium.

Therefore, the bioreactor described in the present invention comprises a deflector medium with a hollow main body, where said hollow main body comprises:
- a first entry, located at the bottom of the main body, configured to allow fluid to enter the interior of the main body and return decantable granular biomass to the tank;
- a second opening, located on the side of the main body, connected to the aerobic bioreactor outlet; and
- a third opening located at the top of the main body configured to allow bubbles to exit.

Thus, unlike other current bioreactors, this deflector medium can act as a separator of the treated fluid from the granular biomass. The presence of a deflector medium such as the one described in the present invention means that the bioreactor comprising it can operate with a continuous feed and outlet flow, reducing the loss of biomass inside the tank, improving the stability of the bioreactor over time.

In short, the deflector is configured so that the biomass exiting the bioreactor does not reach a settling speed of more than 10 m/h, which is the speed required to be considered optimal for the formation of granular biomass.

In this way, under a continuous feed flow, it is possible to maintain the granular biomass inside the BRFC bioreactor, while allowing the exit of the surplus biomass. By increasing the retention time of biomass inside the tank, the maturation of cellular aggregation is encouraged through the production of extracellular polymers leading to granular biomass, with an optimal decanting rate.

All this means that the BRFC bioreactor of the present invention allows to obtain the advantages of a granular system such as obtaining yields and a concentration of biomass much higher than conventional active sludge systems, but also working under a continuous flow configuration, instead of doing it in sequential mode as in other granular reactors that are used in wastewater treatment. Therefore, by eliminating the flocs, which compete for the same nutrients, the growth of granular biomass within the BRFC reactor is favored, giving a progressive enrichment of granular aerobic sludge in a continuous regime.

The result of this configuration is the formation of granular biomass at the bottom of the tank and a continuously treated effluent.

In a second aspect of the invention, a process developed in the bioreactor of the present invention can be defined comprising the following steps:
- Continuous inlet and accumulation of an influent in the bioreactor tank, where the bioreactor tank has an air flow rate in the bioreactor tank in the range 0.5-15 mg O₂ per litre and a hydraulic retention time for 2-24 h, at a pH between 6 and 9, and a temperature between 5 - 45 °C;
- Inoculation of microorganisms and formation of granular biomass in the bioreactor tank;
- Separation of granular biomass and treated water inside the deflector medium; and
- Output of a clarified effluent continuously.

Thus, thanks to the bioreactor of the present invention, the formed granulated biomass has, preferably, a decantation speed greater than 10 m/h and a biomass concentration of up to 30 g/L, preferably in the range 1 - 20 g/L, in a stable way over time.

On the one hand, in contrast to current solutions, the decanting speed of the biomass formed in the bioreactor of the present invention avoids the need for high recirculation of sludge in a secondary decanting tank to maintain an optimum concentration of bacteria, as does occur in conventional purification systems. Additionally, a greater compaction of the biomass formed is achieved, which translates into the capacity to have a greater number of biomass per litre, allowing aerobic and anaerobic processes to be carried out in the same bioreactor.

On the other hand, the bioreactor according to the present invention presents the output at the top. In this way, there is the possibility of having granular biomass in the entire volume of the bioreactor, which causes a significant increase in biomass per liter. In other words, thanks to this solution, a greater amount of bacteria is achieved within the system, so the performance in the removal of contaminants is much higher, above 95%.

Due to the low biomass loss in the bioreactor compared to other bioreactors, it is not necessary to decant the biomass in a second bioreactor and reintroduce it into the initial bioreactor, and it enables the reactor to operate in continuous mode for a long time. Therefore, the bioreactor of the present invention allows to reduce the volume, with a reduction of up to 50% of the volume of an equivalent bioreactor, necessary by improving the purification rates obtained in conventional active sludge systems. In turn, the continuous configuration of the present bioreactor manages to increase by 50% the volume of treated water per unit of time compared to the BGS reactors. In addition, the present invention manages to avoid the loss of biomass from bioreactors in continuous, which enables the present invention to a stable operation over time.

Therefore, from an economic point of view, the present invention improves the sustainability and competitiveness of the water treatment sector since the quality of the effluents is increased by means of a more effective and cost-effective treatment achieving a reduction in energy expenditure in recirculation greater than 50%. The present invention achieves acceptable yields for water treatment, achieving to reduce up to 80% the amount of nitrogen and 90% the amount of organic matter.

Among the advantages of the invention compared to other existing systems it is worth mentioning the following:
- Capacity of treatment of large flows.
- Lack of means of decantation prior to emptying the bioreactor.
- Smaller size of the bioreactor.
- Improvement of process efficiency.
- Increase in the amount of biomass per volume of bioreactor.
- Growth of granular biomass in the entire volume of the bioreactor.
- Stable operation over time.

These results show how this system is a viable alternative to the current solutions of water treatment systems.

This could translate into an economic benefit for companies by increasing profits and freeing up economic resources to promote employability by creating new jobs with higher qualifications.

In the figures, the following elements are shown:
1. Bioreactor
2. Tank
3. Base of the tank
4. Wall of the tank
5. Inlet of the tank
6. Outlet of the tank
7. Aeration medium
8. Diffuser
9. Aqueous fluid
10. Air bubbles
11. Granular biomass
12. Flocs
13. Deflector medium
14. Main body
15. First entry
16. Second opening
17. Third opening
18. Protrusion
19. Lateral hole

Throughout the description and claims the word "understands" and its variants are not intended to exclude other technical characteristics, components or steps. In addition, the word "understands" includes the case "consists of". For the experts in the field, other objects, advantages and characteristics of the invention will be released in part from the description and in part from the practice of the invention. The following examples and drawings are provided as an illustration and are not intended to be limiting to the present invention. In addition, the present invention covers all possible combinations of particular and preferred accomplishments indicated here. here, as long as it falls within the scope of the appended claims.

### Brief description of the figures

Figure 1 shows a realization of the continuous flow bioreactor.
Figure 2 shows an elevation of an embodiment of the bioreactor deflector medium.
Figure 3 shows a plant of an embodiment of the bioreactor deflector medium.
Figure 4 shows a comparative graph of the results of granular biomass concentration (CBG), in g/L, of a continuous flow bioreactor (BRFC1), according to the present invention, against other existing solutions (BRFC2 and BRFC3) over time (t), in days.

### Detailed description of the invention

The present invention describes a continuous flow bioreactor (1) for water treatment by forming aerobic granular biomass. The water to be treated can consist of an influent of drinking water or wastewater, both urban and industrial. Therefore, in order to develop water treatment and granular biomass formation inside the bioreactor tank, operating in continuous flow, the bioreactor requires a specific configuration.

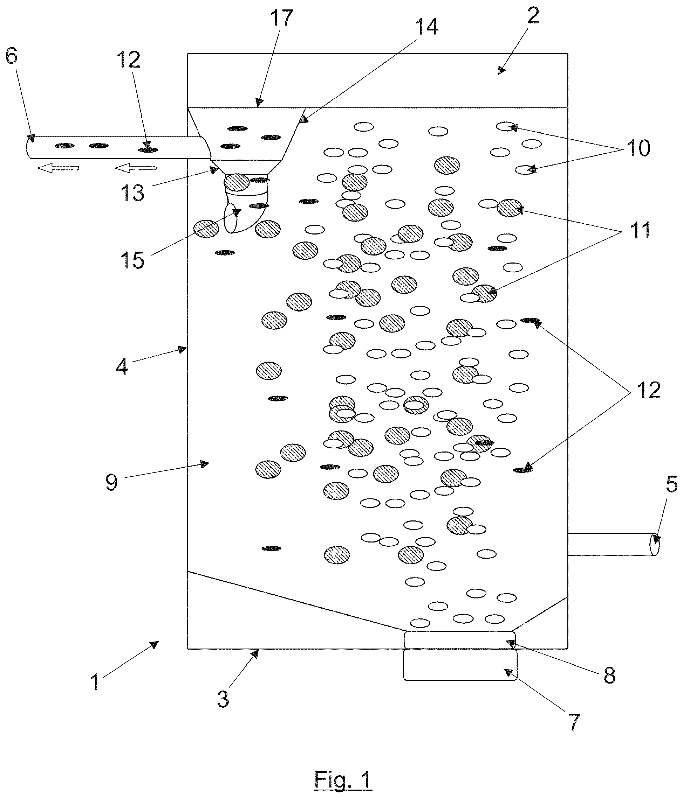

Thus, Figure 1 shows a embodiment of the bioreactor (1) of continuous flow.

The continuous flow bioreactor (1) according to the present invention comprises a tank (2) configured to treat an aqueous fluid (9) inside. This tank (2) has a base (3) with a wall (4) arranged around that base (3), with an inlet (5) of an influent, preferably wastewater to be treated, and an outlet (6) for a clarified effluent, with the presence of flocs (12) and a reduced amount of granular biomass (11). Preferably, the inlet is located in the furthest part of the tank (2) from the outlet so that the influent loaded with contaminants is homogenized inside the tank, being treated before its exit. In a preferential embodiment, the inlet (5) is located at the bottom, close to the base (3) of the tank (2), while the outlet (6) is arranged at the top, as far away as possible from the inlet (5).

In addition, the bioreactor (1) comprises an aeration medium (7) configured to introduce air bubbles (10) into the tank (2) of the bioreactor (1). In a preferred embodiment, the bioreactor (1) presents an upward flow of air, in the form of bubbling. For this purpose, the aeration medium (7) may comprise a diffuser (8), for example, in the form of a porous plate, which evenly distributes air bubbles (10).

However, the granulation process requires a time of retention of biomass in the tank (2). To prevent the loss of said biomass in the tank (2), the bioreactor (1) comprises a deflector medium (13) connected to the tank outlet (2) of the bioreactor (1) configured to extract clarified water and avoid the exit of granular biomass (11) with at least a decanting speed of 10 m/h.

As shown in Figure 1, the deflector medium (13) is disposed submerged at the top of the tank (2), preferably at the same height or above the water level, which allows to avoid that the granular biomass (11) can be placed above the deflector medium (13).

In addition, in another preferential embodiment, the deflector medium is located away from the air bubble (10) stream produced in the aeration medium (7). In this way, the entry of granular biomass (11) into the deflector medium (13) is reduced, managing to keep this type of biomass in the tank (2) for enough time for the formation of the granules.

The ability to maintain the biomass inside the tank (2) of the bioreactor described in this solution until the formation of granular biomass (11) manages to avoid the loss of biomass, so it can be used as a continuous flow bioreactor stably over time, unlike the solutions known in the state of the art.

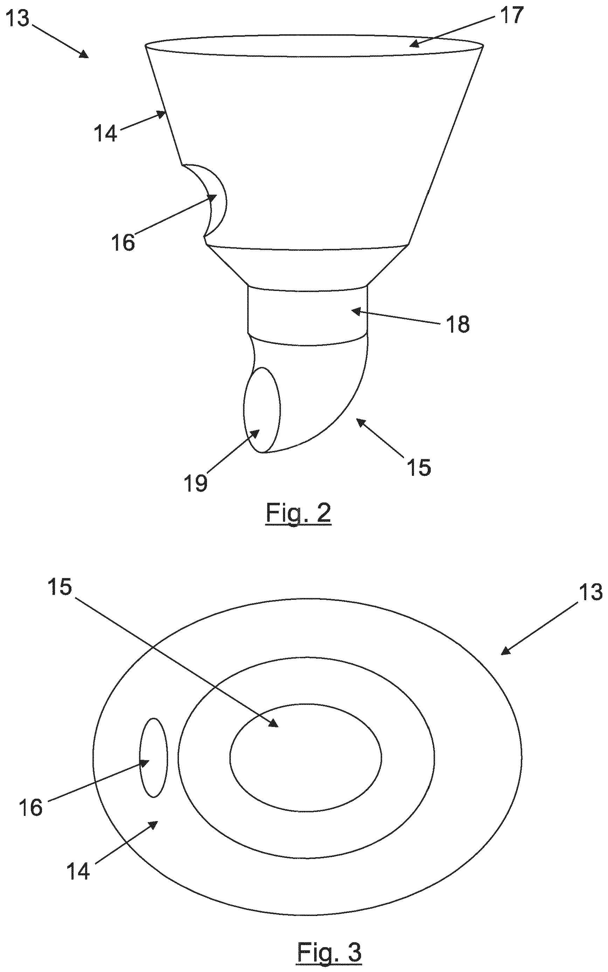

In this sense, Figure 2 shows an elevation of a preferential embodiment of the deflector medium (13) of the bioreactor (1).

As shown in this Figure 2, the main body (14) is hollow and comprises three openings (15, 16 and 17), which can be crossed by the aqueous fluid:
- a first opening or entry (15), located at the bottom of the main body (14), configured to allow the entry of aqueous fluid (9) into the main body (14). In addition, it is configured to return the granular biomass (11) to the inside of the tank (2) in case it accesses the inside of the deflector medium
- a second opening (16) or exit, located on the side of the main body (14). This second opening (16) is connected to the tank (2) outlet of the bioreactor (1).
- a third opening, located at the top of the main body (14) configured to allow air bubbles to exit (10).

The first entry (15) allows entry into the main body (14) of the deflector medium (13) by the aqueous fluid (9). This fluid (9) has different particulate material including both granulated biomass (11) and flocs (12), which can move in the fluid by aeration effect. The difference between this particulate material is the decanting capacity of granular biomass (11). Specifically, granular biomass (11) can be indicated as those particles composed of microorganisms that have a decanting speed of at least 10 m/h. The situation of this entry in the lower part of the deflector medium (13) is opposed to the entry of granular biomass (11), due to the tendency to sediment of said granular biomass (11).

On the other hand, the second opening (16), is connected with the outlet (6) of the tank (2), and is preferably placed in a lateral way, and even more preferential in an elevated area of the main body (14) by favoring the separation of granular biomass (11). In this way, on the one hand, the impact of aeration in the area where the deflector medium is located (13) is reduced and, in addition, it could be possible to use infrastructures as the existing reservoir in conventional treatment plants, which provide an acceptable installation for the present invention by operating with continuous flow due to the high volume of the treated influent. The structure of these reservoirs would be modified for the adaptation of the aeration medium (7) or the incorporation of the deflector media (13), although the cost could be reduced by reusing existing structures.

Finally, the third opening (17) is located at the top of the main body (14). Its main function is to allow the exit of air bubbles (10) that have entered the deflector medium (13). The possibility of the exit of these air bubbles (10), existing inside the deflector medium (13) implies the creation of an area inside the tank (2) where the effect of upward aeration is reduced. In this way, the hollow volume in the main body is an ideal space for the decanting of granular biomass (11).

In a preferred embodiment, a deflector medium (13) is presented with a main body (14) in inverted trunk cone form. As mentioned above, this form contributes to the granular biomass (11), carried by aeration and introduced into the deflector medium (13), having an area where there are no air bubbles (10) and returning to the tank (2). The main body (14) has such a volume that it allows the separation of granular biomass (11). In addition, it is preferable to return this granular biomass (11) to the tank (2), without the formation of a biofilm inside the deflector medium (13). In this way, the truncated cone shape provides an acceptable central space to carry out the separation of biomass and walls through which granular biomass (11) can roll until the first entry (15), whose diameter is preferably reduced compared to the main body (14).

This first entry (15) has a lateral hole (19) parallel to the upward flow of the air bubbles (10). In a preferably embodiment, this lateral hole (19) is oriented towards the wall of the tank (4), reducing the effect of the upward flow of aeration. As can be seen in Figure 2, the first entry (15) connects the main body (14) to the lateral hole (19).

For its part, the first entry (15) located at the bottom of the deflector medium (13), causes that, due to the decanting characteristics of the granular biomass (11), it cannot rise to higher areas of the deflector medium (13) where the second opening (16) is located, and the outlet (6) of the tank (2).

To improve this limitation in granular biomass (11) inlet, in another embodiment, the first entry (15) may have an additional protrusion (18), which reorients the first entry (15).

However, despite the improvement of the configuration present by the deflector medium (13), in the event that some granule of the granular biomass (11) enters the deflector medium (13), the main body itself (14) of the deflector medium is configured to allow the return to the tank of the bioreactor of the granules (by gravity), while the flocs (12), having a lower decanting speed, they would not be able to return to the tank (2) and would pass through the second opening (16) to the outlet (6) of the tank (2).

Figure 3 shows a plant of an embodiment of the deflector medium (13) of the bioreactor (1). In this Figure 3, it is shown in detail how the third opening (17) covers the entire surface of the upper part of the main body (14). This configuration, in addition to allowing air bubbles to exit (10), facilitates the cleaning capacity inside the deflector medium (13). The alternative of having a partial cover that allows the exit of air bubbles (10) would be operationally viable and would prevent the entry of external agents through the upper part of the deflector medium (13). However, the existence of a surface as the one described would generate the possibility of accumulation of a biofilm, which could reduce the performance of the bioreactor (1).

The outgoing stream of the bioreactor (1) is a clarified aqueous stream, comprising the flocs (12) present in the fluid, but whose granular biomass concentration (11) has been minimized. From a higher perspective of this embodiment, it can be seen that the first entry (15), located at the bottom, presents a diameter lower than the volume present inside the main body (14) of the deflector medium (13). This first entry (15) is where granular biomass (11) comes out once the effect of aeration is suppressed.

In short, the deflector medium (13) is configured for the output of the bioreactor (1) of that biomass that does not reach a higher decantation of 10m/h that is necessary to be considered as optimal for the formation of granular biomass (11).

In this way, under a continuous feed flow, it is possible to maintain the granular biomass (11) inside the BRFC bioreactor, while allowing the exit of the surplus biomass, such as the flocs (12), training the formation of granulated biomass while treating a stream of water.

In a second aspect of the invention, a process for water treatment is described. The process for water treatment used has the following stages:
- Continuous entry and accumulation of an influent into the bioreactor tank (2),
- Inoculation of microorganisms and formation of granular biomass (11) in bioreactor tank (2),
- Output of an effluent of clarified water on a continuous basis.

Thus, according to the process of water treatment through the formation of granular biomass according to the present invention, the result is a purified effluent obtained thanks to the metabolism produced by the microbial populations existing in the granular biomass (11) formed in the bioreactor (1).

The feeding of the influent to the tank (2) can be done by pumping or gravity, thus it is possible to perform a constant feeding based on the flow of the influent inlet that is necessary to treat.

Aeration in the bioreactor (1) occurs by using an aeration medium (7), preferably a diffuser (8), for example, a porous plate, at the base. This aeration medium (7), when located in the lower area of the bioreactor (1), allows to maintain the granular biomass (11) in a continuous movement that results in granular formation.

Specifically, the amount of air in the tank is in the range of 0.5 - 15 mg of O₂ per liter. Preferably, 0,5 - 8 mg of O₂ per liter, and more preferably 2-4 mg of O₂ per liter. This air stream provides enough oxygen for all those aerobic processes that are required for the removal of contaminants in the wastewater.

In addition to the supply of air, other factors must be controlled for the proper development of the biomass formation process. In a preferential embodiment, the accumulation of the aqueous stream is carried to a pH between 6 and 9, even more preferably 6,5 - 8. In addition, the temperature during the granulation process is between 5 and 45°C, preferably 15 - 25°C. The use of these conditions affects the behavior of the inoculated microorganisms, which reduces the performance of the water treatment process.

For proper water treatment, anaerobic processes are also required. The formation of granular biomass (11) is completely necessary to carry out such anaerobic processes, since they are carried out in the internal zones of the granules. In addition, the formation of granular biomass (11) is essential to increase the concentration of microorganisms within the system.

On the other hand, thanks to this solution, all biomass that is inside the bioreactor (1) but is not in the form of granular biomass (11), will not be able to multiply when it goes along with the effluent through the outlet, reducing or even preventing the proliferation of microorganisms that can alter the performance of the system. In other words, the microorganisms existing in the flocs (12), competitors with granular biomass (11) for existing nutrients, are eliminated in the outgoing bioreactor stream (1).

Therefore, in order to develop water treatment, a granular biomass (11) must be formed with the appropriate microbial populations to be able to eliminate all the contaminants. Among the microbial populations used for water treatment, we can highlight: Ammonium oxidizing bacteria (AOB), nitrite oxidizing bacteria (NOB), ammonium oxidizing archaea (AOA), and phosphate accumulating bacteria (PAO).

Biomass retention is a fundamental stage in the process. This stage defines the treatment of water, as well as the formation of an active sludge comprising granular biomass (11), allowing time to develop the action of microorganisms.

Therefore, unlike other existing solutions in the sector, the result of this stage is the possibility of accumulation of granular biomass (11) with a decanting speed greater than 10 m/h in an active sludge, which allows the use of this solution in a stable way for the purification of the continuous flow of contaminated water, over time.

### Example 1 - Variation of retention times

Example 1 shows an example of a process performed for water treatment by forming granular biomass in a bioreactor according to the present invention. Said bioreactor has a volume of 6 L of capacity and was fed with an aqueous stream of continuous flow. The fluid is an aqueous stream with a composition as shown in Table 3.

**Table 3. Composition of the wastewater used to obtain granules.**

| **Compound** | **Concentration (g/L)** |
|---|---|
| CH₃COONa • 3H₂O | 0.79 |
| NH₄Cl | 0,25 |
| KCI | 0.04 |
| MgSO₄ · 7H₂O | 0.10 |
| K₂HPO₄ | 0.085 |
| KH₂PO₄ | 0.03 |

The inoculation of the microorganisms was carried out by using an active mud from a wastewater treatment plant. A pH equal to 7, an aeration of 6 mg O₂/L and a temperature of 22°C were used, giving rise to optimal conditions for the development of the microorganisms used in this example.

In this sense, the following Table 4 shows the results of granular biomass concentration (CBG), decanting rate (VD), organic Matter Removal Performance (RMO) and Total Nitrogen Removal Performance (RNT) obtained in 6 samples of use of the invention system varying hydraulic retention time (HRT).

**Table 4. Results according to the variation of retention times**

| **Sample** | **TRH (h)** | **CBG (g/L)** | **VD (m/h)** | **RMO (%)** | **RNT (%)** |
|---|---|---|---|---|---|
| Sample 1 | 24 | 4.7 | 33 | 99 | 99 |
| Sample 2 | 16 | 4.9 | 33 | 99 | 96 |
| Sample 3 | 8 | 8.2 | 35 | 99 | 87 |
| Sample 4 | 6 | 8.1 | 39 | 97 | 77 |
| Sample 5 | 4 | 6.2 | 28 | 96 | 70 |
| Sample 6 | 2 | 5.8 | 20 | 92 | 61 |

### Example 2 - Temperature variation

In the same bioreactor in Example 1, with a HRT of 8 hours, the bioreactor was inoculated and the operation was carried out at a variable temperature. According to Table 5, it is observed that the performance decreases when the temperature drops to levels below 10°C

**Table 5. Results according to temperature variation**

| | **Temperature (°C)** | **RMO (%)** | **RNT (%)** |
|---|---|---|---|
| Sample 7 | 30 | 99 | 89 |
| Sample 8 | 20 | 93 | 82 |
| Sample 9 | 10 | 80 | 47 |
| Sample 10 | 5 | 60 | 26 |

### Example 3 - Evolution over time

Three continuous flow granular bioreactors with different designs (BRFC1, BRFC2 and BRFC3) were inoculated with the same active sludge and operated under the same conditions. In this sense, the operating conditions exposed were an aeration of 6 mg O2/L, a temperature of 22°C, a pH of 7 and a HRT of 8h.

The different continuous flow bioreactor (BRFC) models used were:
- BRFC1: reactor, according to the present invention, comprising a deflector medium (13) coupled to the output of the bioreactor, which allowed the sedimentation of the granules in the water outlet zone;
- BRFC2: reactor comprising a sheet that separated the bioreactor in two, establishing a first zone of aeration and rise of the granules and a second zone of nonaeration and descent thereof, where the water outlet was located; and
- BRFC 3: reactor comprising two zones, inside and outside, defined by two concentric tubes. The inner zone is defined by the inside of the concentric tube of smaller radius, where the aeration was introduced by raising the granules, which were lowered again in the absence of aeration by the outer zone, defined by the annular space between the tubes, where was the water outlet.

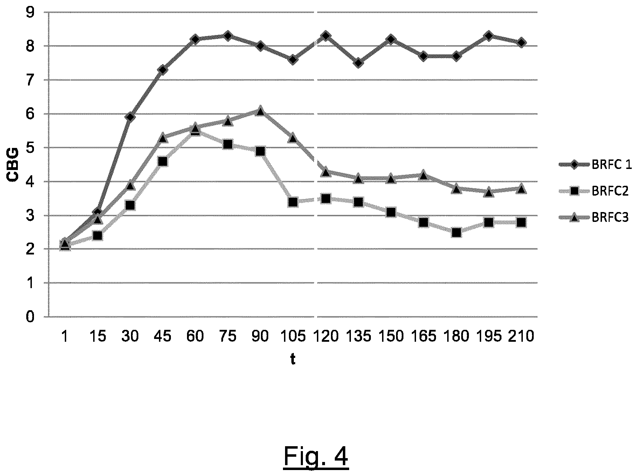

As shown in Figure 4, the yield in water treatment has remained stable over time (t - in days), confirming the improvement compared to other solutions where the loss of granular biomass concentration (CBG - g/L) it is such that they cannot be used in continuous flow and require the continuous incorporation of new biomass. In this sense, it can be observed how the alternative designs of a continuous flow bioreactor, BRFC2 and BRFC3, already developed previously, achieve biomass yields much lower than those achieved by the bioreactor BRFC1, reactor according to the present invention.

## Claims

1. Continuous flow bioreactor (1) configured for water treatment comprising:
- a tank (2) comprising a base (3) and a wall (4) around said base (3), configured to treat an aqueous fluid (9) inside, and an inlet (5) for an influent and an outlet (6) for an effluent, the inlet (5) being located at a bottom portion of the tank (2) and the outlet (6) being located at a top portion of the tank (2); and
- an aeration medium (7) configured to introduce air bubbles (10) into the tank (2); **characterized in that** the bioreactor (1) further comprises:
- a deflector medium (13) connected to the outlet (6) configured to extract clarified water and to avoid the leakage of granular biomass (11) with at least a decanting speed of 10 m/h, the deflector medium (13) being located inside the tank (2) and comprising a hollow main body (14), where said hollow main body (14) comprises:
- a first opening (15), located at the bottom of the hollow main body (14), configured for allowing the entry of aqueous fluid (9) into the hollow main body (14) and for returning the granular biomass (11) to the tank (2);
- a second opening (16), located in a lateral way on the hollow main body (14), connected to the outlet (6) of the tank (2); and
- a third opening (17), located at the top of the hollow main body (14), configured for allowing the exit of air bubbles (10), wherein the deflector medium (14) is located inside the tank (2) at such a height that the upper part of the deflector medium is configured to be at a same height or above water level, which prevents granules from passing over and entering inside the hollow main body (14).

2. Continuous flow bioreactor (1) according to claim 1, wherein the deflector medium (13) comprises a conical trunk shape.

3. Continuous flow bioreactor (1) according to any of claims 1-2, where the third opening (17) of the deflector medium (13) covers the entire surface of the upper part of the hollow main body (14).

4. Continuous flow bioreactor (1) according to any of claims 1-3, where the hollow main body (14) of the deflector medium (13) comprises a protrusion (18) connected through the first opening (15) comprising a lateral hole (19) parallel to the wall (4) of the tank (2), configured to allow the entry of the aqueous fluid (9) into the hollow main body (14) and return granular biomass (11) to the tank (2).

5. Continuous flow bioreactor (1) according to claim 4, where the protrusion (18) of the hollow main body (14) is oriented toward the wall (4) of the tank (2).

6. Continuous flow bioreactor (1) according to any of claims 1-5, where the aeration medium (7) is located at the base (3) of the tank (2).

7. Continuous flow bioreactor (1) according to any of claims 1-6, where the second opening is located in an elevated area of the hollow main body (14).

8. Process of water treatment by forming granular biomass in a continuous flow bioreactor (1) according to any of claims 1-7, **characterized in that** it includes the following steps:
- continuous inlet and accumulation of an influent in the bioreactor tank (2), where the tank (2) has an air flow rate in the range of 0,5-15 mg O₂/liter and a hydraulic retention time for 2 - 24 h, at a pH between 6 and 9, and a temperature between 5 -45 °C;
- inoculation of microorganisms and formation of granular biomass (11) in bioreactor tank (2);
- separation of granular biomass (11) and treated water inside the deflector medium (13); and
- output of a clarified effluent continuously.

9. Process according to claim 8, where the air inlet forms a stream of air bubbles.

10. Process according to any of claims 8-9, where the pH is between 6.5 and 8.

11. Process according to any of claims 8-10, where the air intake presents a flow between 2 - 4 mg O₂ / liter.

12. Process according to any of claims 8-11, where the temperature is between 15-35 °C.

13. Process according to any of claims 8-12, where the separation of granular biomass (11) is a decanting stage.

## Patentansprüche

1. Kontinuierlicher Durchflussbioreaktor (1) zur Wasseraufbereitung, aufweisend:
- einen Behälter (2), umfassend einen Boden (3) und einer den Boden (3) umgebenden Wand (4), der zur Behandlung einer wässrigen Flüssigkeit (9) im Inneren ausgelegt ist, sowie einen Einlass (5) für einen Zulauf und einen Auslass (6) für einen Ablauf, wobei der Einlass (5) an einem unteren Abschnitt des Behälters (2) angeordnet ist und der Auslass (6) an einem oberen Abschnitt des Behälters (2) angeordnet ist; und
- ein Belüftungsmedium (7), das so ausgebildet ist, dass es Luftblasen (10) in den Behälter (2) einleitet;
**dadurch gekennzeichnet, dass** der Bioreaktor (1) ferner aufweist:
- ein mit dem Auslass (6) verbundenes Ablenkmedium (13), das so ausgelegt ist, dass es geklärtes Wasser abzieht und das Austreten von granularer Biomasse (11) verhindert, mit einer Abflussgeschwindigkeit von mindestens 10 m/h, wobei das Ablenkmedium (13) im Inneren des Behälters (2) angeordnet ist und einen hohlen Hauptkörper (14) umfasst, wobei der hohle Hauptkörper (14) umfasst:
- eine erste Öffnung (15), die am Grund des hohlen Hauptkörpers (14) angeordnet und so ausgelegt ist, dass sie den Eintritt von wässriger Flüssigkeit (9) in den hohlen Hauptkörper (14) ermöglicht und die körnige Biomasse (11) in den Behälter (2) zurückführt;
- eine zweite Öffnung (16), die seitlich am hohlen Hauptkörper (14) angeordnet und mit dem Auslass (6) des Behälters (2) verbunden ist; und
- eine dritte Öffnung (17), die an dem oberen Abschnitt des hohlen Hauptkörpers (14) angeordnet ist, die so ausgebildet ist, dass sie das Austreten von Luftblasen (10) ermöglicht, wobei das Ablenkmedium (14) im Inneren des Behälters (2) in einer solchen Höhe angeordnet ist, dass der obere Teil des Ablenkmediums auf gleicher Höhe oder über dem Wasserspiegel liegt, wodurch verhindert wird, dass Granulat darüber hinweggelangt und in das Innere des hohlen Hauptkörpers (14) gelangt.

2. Kontinuierlicher Durchflussbioreaktor (1) nach Anspruch 1, wobei das Ablenkmedium (13) eine konische Rumpfform aufweist.

3. Kontinuierlicher Durchflussbioreaktor (1) nach einem der Ansprüche 1-2, wobei die dritte Öffnung (17) des Ablenkmediums (13) die gesamte Oberfläche des oberen Teils des hohlen Hauptkörpers (14) abdeckt.

4. Kontinuierlicher Durchflussbioreaktor (1) nach einem der Ansprüche 1-3, wobei der hohle Hauptkörper (14) des Ablenkmediums (13) einen Vorsprung (18) aufweist, der durch die erste Öffnung (15) verbunden ist, die ein seitliches Loch (19) parallel zur Wand (4) des Behälters (2) umfasst, die so ausgebildet ist, dass sie den Eintritt der wässrigen Flüssigkeit (9) in den hohlen Hauptkörper (14) ermöglicht und granulierte Biomasse (11) in den Behälter (2) zurückführt.

5. Kontinuierlicher Durchflussbioreaktor (1) nach Anspruch 4, wobei der Vorsprung (18) des hohlen Hauptkörpers (14) zur Wand (4) des Behälters (2) hin ausgerichtet ist.

6. Kontinuierlicher Durchflussbioreaktor (1) nach einem der Ansprüche 1 bis 5, wobei sich das Belüftungsmedium (7) am Boden (3) des Behälters (2) befindet.

7. Kontinuierlicher Durchflussbioreaktor (1) nach einem der Ansprüche 1 bis 6, wobei sich die zweite Öffnung in einem erhöhten Bereich des hohlen Hauptkörpers (14) befindet.

8. Verfahren zur Wasseraufbereitung durch Bildung von granularer Biomasse in einem kontinuierlicher Durchflussbioreaktor (1) nach einem der Ansprüche 1 bis 7, **dadurch gekennzeichnet, dass** es die folgenden Schritte umfasst:
- kontinuierliches Einleiten und Ansammeln eines Zulaufs in den Bioreaktorbehälter (2), wobei der Behälter (2) eine Luftdurchsatzrate im Bereich von 0,5-15 mg O₂/Liter und eine hydraulische Verweilzeit von 2-24 Stunden bei einem pH-Wert zwischen 6 und 9 und einer Temperatur zwischen 5-45 °C aufweist;
- Beimpfung mit Mikroorganismen und Bildung von granularer Biomasse (11) im Bioreaktorbehälter (2);
- Abscheidung der granularen Biomasse (11) und des behandelten Wassers innerhalb des Ablenkmediums (13); und
- kontinuierliche Abgabe eines geklärten Abwassers.

9. Verfahren nach Anspruch 8, wobei der Lufteinlass einen Strom von Luftblasen bildet.

10. Verfahren nach einem der Ansprüche 8-9, wobei der pH-Wert zwischen 6,5 und 8 liegt.

11. Verfahren nach einem der Ansprüche 8-10, wobei der Lufteinlass einen Durchfluss zwischen 2-4 mg O₂/Liter aufweist.

12. Verfahren nach einem der Ansprüche 8 bis 11, wobei die Temperatur zwischen 15-35 °C liegt.

13. Verfahren nach einem der Ansprüche 8 bis 12, wobei die Abtrennung der granularen Biomasse (11) in einer Dekantierstufe erfolgt.

## Revendications

1. Bioréacteur (1) à flux continu configuré pour le traitement de l'eau comprenant :
- une cuve (2) comprenant une base (3) et une paroi (4) autour de ladite base (3), configurée pour traiter un fluide aqueux (9) à l'intérieur, et une entrée (5) pour un influent et une sortie (6) pour un effluent, l'entrée (5) étant située dans une portion inférieure de la cuve (2) et la sortie (6) étant située dans une portion supérieure de la cuve (2) ; et
- un moyen d'aération (7) configuré pour introduire des bulles d'air (10) dans la cuve (2) ;
**caractérisé en ce que** le bioréacteur (1) comprend en outre :
- un moyen déflecteur (13) connecté à la sortie (6) configuré pour extraire de l'eau clarifiée et pour éviter la fuite de biomasse granulaire (11) avec au moins une vitesse de décantation de 10 m/h, le moyen déflecteur (13) étant situé à l'intérieur de la cuve (2) et comprenant un corps principal creux (14), où ledit corps principal creux (14) comprend :
- une première ouverture (15), située au fond du corps principal creux (14), configurée pour permettre l'entrée du fluide aqueux (9) dans le corps principal creux (14) et pour renvoyer la biomasse granulaire (11) dans la cuve (2) ;
- une deuxième ouverture (16), située latéralement sur le corps principal creux (14), connectée à la sortie (6) de la cuve (2) ; et
- une troisième ouverture (17), située au sommet du corps principal creux (14), configurée pour permettre la sortie des bulles d'air (10), dans lequel le moyen déflecteur (14) est situé à l'intérieur de la cuve (2) à une hauteur telle que la partie supérieure du moyen déflecteur est configurée pour être à une même hauteur ou au-dessus du niveau d'eau, ce qui empêche les granules de passer par-dessus et de pénétrer à l'intérieur du corps principal creux (14).

2. Bioréacteur (1) à flux continu selon la revendication 1, dans lequel le moyen déflecteur (13) comprend une forme de tronc conique.

3. Bioréacteur (1) à flux continu selon l'une quelconque des revendications 1 à 2, où la troisième ouverture (17) du moyen déflecteur (13) couvre la totalité de la surface de la partie supérieure du corps principal creux (14).

4. Bioréacteur (1) à flux continu selon l'une quelconque des revendications 1 à 3, où le corps principal creux (14) du moyen déflecteur (13) comprend une saillie (18) connectée à travers la première ouverture (15) comprenant un trou latéral (19) parallèle à la paroi (4) de la cuve (2), configuré pour permettre l'entrée du fluide aqueux (9) dans le corps principal creux (14) et renvoyer la biomasse granulaire (11) dans la cuve (2).

5. Bioréacteur (1) à flux continu selon la revendication 4, où la saillie (18) du corps principal creux (14) est orientée vers la paroi (4) de la cuve (2).

6. Bioréacteur (1) à flux continu selon l'une quelconque des revendications 1 à 5, où le moyen d'aération (7) est situé au niveau de la base (3) de la cuve (2).

7. Bioréacteur (1) à flux continu selon l'une quelconque des revendications 1 à 6, où la deuxième ouverture est située dans une zone élevée du corps principal creux (14).

8. Procédé de traitement de l'eau par formation de biomasse granulaire dans un bioréacteur (1) à flux continu selon l'une quelconque des revendications 1 à 7, **caractérisé en ce qu'**il comprend les étapes suivantes :
- entrée continue et accumulation d'un influent dans la cuve (2) du bioréacteur, où la cuve (2) présente un débit d'air dans la plage de 0,5-15 mg O₂/litre et un temps de rétention hydraulique de 2 à 24 h, à un pH entre 6 et 9, et une température entre 5 -45 °C ;
- inoculation de micro-organismes et formation de biomasse granulaire (11) dans la cuve (2) du bioréacteur ;
- séparation de la biomasse granulaire (11) et de l'eau traitée à l'intérieur du moyen déflecteur (13) ; et
- sortie d'un effluent clarifié en continu.

9. Procédé selon la revendication 8, où l'entrée d'air forme un flux de bulles d'air.

10. Procédé selon l'une quelconque des revendications 8 à 9, où le pH est entre 6,5 et 8.

11. Procédé selon l'une quelconque des revendications 8 à 10, où l'apport d'air présente un débit entre 2 - 4 mg O₂ / litre.

12. Procédé selon l'une quelconque des revendications 8 à 11, où la température est entre 15-35 °C.

13. Procédé selon l'une quelconque des revendications 8 à 12, où la séparation de la biomasse granulaire (11) est une étape de décantation.
